# EUROPÄISCHE PATENTSCHRIFT

(11) **EP 3 289 729 B1**
(45) Veröffentlichungstag und Bekanntmachung des Hinweises auf die Patenterteilung: **26.12.2018**
(21) Anmeldenummer: 16720387.6
(22) Anmeldetag: 25.04.2016
(51) Int. Cl.: H04L 12/28, H04W 12/06, H04W 12/04, H04W 12/08, G08C 23/04, G08C 17/02, G05B 15/02, H04L 29/06

(54) **ANSTEUERUNG VON FUNKTIONEN DER HAUSAUTOMATION**
ACTUATING HOME AUTOMATION FUNCTIONS
COMMANDE DE FONCTIONS DE LA DOMOTIQUE

(30) Priorität: 30.04.2015 DE 102015106742
(43) Veröffentlichungstag der Anmeldung: 07.03.2018
(73) Patentinhaber: Deutsche Telekom AG, 53113 Bonn (DE)
(72) Erfinder: WAGNER, Jens, 04288 Leipzig (DE); LUDWIG, Theresa, 53129 Bonn (DE)
(74) Vertreter: Braun-Dullaeus Pannen Patent- und Rechtsanwälte
(86) Internationale Anmeldenummer: PCT/EP2016/059150
(87) Internationale Veröffentlichungsnummer: WO 2016/173977

(56) Entgegenhaltungen:
- EP-A1- 2 552 055
- WO-A1-2005/071922
- DE-B3-102014 201 468

## Beschreibung

Die Erfindung betrifft ein Verfahren und ein System zum Bedienen von Funktionen der Hausautomation, die in einer abgeschlossenen Räumlichkeit zur Verfügung stehen, wobei die Funktionen jeweils von einem Steuergerät angesteuert werden und wobei die der Räumlichkeit zugeordneten Steuergeräte jeweils in datenleitender Verbindung mit einer gemeinsamen Basisstation stehen. Ein Nutzer hat über ein ihm persönlich zugeordnetes mobiles Endgerät, insbesondere über sein eigenes Mobiltelefon oder Smartphone, die Möglichkeit, Steuerbefehle zur Ansteuerung der jeweiligen Funktionen vorzugeben, die dann über eine ihm persönlich zugeordnete ("dedizierte") Funkverbindung zur Basisstation übertragen und von dieser dem jeweiligen Steuergerät zugestellt werden.

Solche Systeme zur Hausautomation, bei denen mehrere Komponenten unterschiedlicher Anbieter mit einem mobilen Endgerät, insbesondere einem Smartphone, und unter Vermittlung einer Basisstation bedient werden können, sind im Markt bekannt. Sie halten mittlerweile Einzug in viele private und öffentliche Lebensbereiche, da sie bei Steigerung des Wohnkomforts zu erheblichen Einsparungen im Rahmen der Gebäudeinstallation führen.

Allerdings ist die Bedienung der Funktionen über das eigene Mobiltelefon bislang für solche Nutzer schwierig, die sich, wie beispielsweise Hotelgäste, nur zeitweise in für sie fremden Räumen aufhalten und die sich als zunächst für das System unbekannte Nutzer mit entsprechend hohem Aufwand anmelden und mit den Komponenten verbinden ("Pairing") müssen. Dabei sind jedoch schon Systeme bekannt, bei denen sich ein unbekannter Nutzer durch ein Passwort (US 20110265151) oder mittels eines Tokens (DE 2011 10 118 565) respektive eines Freischaltcodes (DE 10 2014 201 468 B3) relativ einfach authentifizieren kann.

Aus EP 2 552 055 A1 ist ein Verfahren zur Registrierung einer Komponente in einem HAN ("Home Area Network") bekannt. Ein Verfahren zur Autentifikation eines externen Gerätes in einem lokalen Netzwerk offenbart die WO 2005/071922A1.

Natürlich bleibt dem "unbekannten" Nutzer bei aller Automatisierung die manuelle Bedienung der Funktionen unbenommen. Betritt ein solcher "unbekannter" Nutzer ein für ihn fremdes Hotelzimmer, so kann er Lichtschalter bedienen oder die Heizung regulieren. Liegt er allerdings im Bett, kann er solche Funktionen nicht mit seinem eigenen Smartphone bedienen, obwohl das Hotel die ehedem vorhandene Funktionalität der Hausautomation zur Verfügung stellen könnte. Ähnlich stellt sich die Situation in vielen Wohnungen, Konferenzräumen oder Arbeitsstätten dar.

In all diesen Fällen liegt das Problem in der bislang nur bedingt möglichen zumindest zeitweisen Authentifizierung eines einzelnen Nutzers in seiner jeweiligen räumlichen Umgebung. Zu diesem Problem trägt bei, dass sich trotz flächendeckender mobiler Datennetze und WLAN in Gebäuden bislang nur schwer feststellen, wer sich in genau welchem Raum befindet und damit welcher Nutzer für einen bestimmten Raum autorisiert werden soll. Eine solche Lokalisierung ist aber wichtig, da eine bestimmte Berechtigung an den Aufenthalt des Nutzers in einem entsprechenden Raum gebunden sein muss. Wären nämlich beliebige Zugriffe auf eine Hausautomation über Datennetze möglich, könnten auch Personen außerhalb des Raumes das Licht steuern, woran dem in dem Raum befindlichen Nutzer jedoch nicht gelegen sein kann. Um den unerlaubten Zugriff auf eine räumlich begrenzte Hausautomation abzusichern, ist daher die Zuordnung entsprechender Schlüssel erforderlich.

Aufgabe der Erfindung ist es nunmehr, ein mit einfachen Mitteln umzusetzendes Verfahren zu schaffen, mit dem sich ein in einem Raum befindlicher - bislang unbekannter - Nutzer bequem bei einer Hausautomatisierung identifizieren und vor allem entsprechend authentifizieren kann, um mit seinem eigenen Mobiltelefon Funktionen der jeweiligen Hausautomatisierung komfortabel bedienen zu können, insbesondere auch ohne Fremdbestimmung von Außen befürchten zu müssen.

Diese Aufgabe wird durch das Verfahren nach Anspruch 1 und das System nach Anspruch 8 gelöst. Bevorzugte Ausgestaltungen ergeben sich aus den jeweiligen Unteransprüchen.

Demnach liegt die grundlegende Idee der erfindungsgemäßen Vorgehensweise darin, dass die dedizierte Funkverbindung zwischen dem Mobiltelefon und der Basisstation, über die sich die Hausautomation steuern lässt, zunächst über eine Infrarot-Nahbereichsverbindung zwischen dem Mobiltelefon und einem in der Räumlichkeit befindlichen Infrarot-Transceiver insofern autorisiert wird, als über diese Infrarot-Nahbereichsverbindung ein initialisierender Datenaustausch stattfindet, bei dem beispielsweise Identifizierer und/oder Schlüssel ausgetauscht werden können. Diese initialisierende Autorisierung ist dann Voraussetzung für die spätere Datenübertragung über die dedizierte Funkverbindung.

Die Erfindung macht es sich dabei zu Nutze, dass die Infrarot-Verbindung nur im Nahbereich innerhalb der Räumlichkeit funktioniert und dabei sogar auf einen Sichtkontakt zwischen Sender und Empfänger angewiesen ist. Mit einer solchen Infrarot-Verbindung, die nur innerhalb der Räumlichkeit funktioniert, kann somit die Anwesenheit eines Infrarotsenders mithin eines Nutzers in einem Raum festgestellt werden.

Ein weiterer Kerngedanke liegt in dem Einsatz des persönlich zugeordneten mobilen Endgerätes, insbesondere des eigenen Mobiltelefons oder Smartphones, das über eine bidirektionale Infrarotschnittstelle verfügt. Die Reichweite der Sendeeinheiten von Smartphones liegt bei mehreren Metern, so dass sich die Infrarotschnittstellen erfindungsgemäß nutzen lassen, um die Anwesenheit eines Nutzers in der mit dem Infrarot-Transceiver ausgestatteten Räumlichkeit zu verifizieren. Somit löst die Erfindung das Problem der Nutzeridentifikation mithin per Infrarotkommunikation.

Darauf aufbauend zeigt die Erfindung ein Verfahren auf, mit dem sich Komponenten der Haus- und Heimautomatisierung in beliebigen Räumlichkeiten sicher von dort nicht beheimateten mithin "unbekannten" Personen steuern lassen. Mit der erfindungsgemäßen Vorgehensweise ist das Problem der Zuordnung einer Person zu einer bestimmten Räumlichkeit durch die Zuteilung eines "Schlüssels" gelöst, ohne das es zu einer Einschränkung im Komfort kommt.

Wie dargelegt, ermöglicht die erfindungsgemäße Vorgehensweise die Bestimmung des Aufenthaltsortes eines Nutzers mittels Infrarotsignalen, die zwischen dem eigenen Smartphone des Nutzers und dem Transceiver ausgetauscht werden. Zudem wird dem Nutzer über diese Infrarot Verbindung ein Zugriff auf die in diesem Raum befindlichen vernetzten Geräte der Hausautomation verschafft. Somit dient das erfindungsgemäße Verfahren der Vergabe von Rechten zur Nutzung von Komponenten der Hausautomatisierung an "unbekannte" Nutzer und dem Erteilen der Erlaubnis zur Ansteuerung der Komponenten in intelligenten Räumen durch Smartphones oder Tablets der "unbekannten" Nutzer.

Vorteilhafterweise ist das Verfahren so eingerichtet, dass eine Person zur Ansteuerung nur berechtigt ist, solange sie sich in der jeweiligen Räumlichkeit aufhält. Die Autorisierung der dedizierten Funkverbindung sollte somit erlöschen, sobald das Mobiltelefon insbesondere über einen längeren Zeitraum aus dem Sendebereich des Infrarot-Transceivers gelangt oder sobald ein vorgegebener Zeitpunkt überschritten ist.

In einer bevorzugten Ausführungsform sendet der Nutzer zum Zwecke der Autorisierung mit seinem Mobiltelefon eine entsprechende Anfrage über die Infrarot Funkverbindung an den Infrarot-Transceiver und daraufhin vom Transceiver über dieselbe Infrarot Funkverbindung einen geheimen Schlüssel zur Verschlüsselung der dedizierten Funkverbindung erhält, den der Transceiver von der Basisstation erhalten hat.

Zusammenfassend löst das erfindungsgemäße Verfahren die Probleme bei der Vergabe von Zugriffsrechten und der Raumzuordnung durch Infrarotkommunikation, die wegen ihrer geringen Reichweite auf die jeweilige Räumlichkeit beschränkt ist. Damit versetzt das erfindungsgemäße Verfahren eine Person in die Lage, die Hausautomation in beliebigen Räumen individuell zu steuern. Mit der Erfindung kann jeder Nutzer in jedem Raum sofort alle dort verfügbaren Komfortfunktionen mittels seines Smartphones steuern. Das gilt für Zugabteile, Hotelzimmer, den Arbeitsplatz, Wohnungen von Freunden und natürlich das eigene Heim. Dabei sind die Komfortfunktionen solche, die sich auch ohne die erfindungsgemäße "Smartfunktion" nutzen lassen, nämlich beispielsweise Lichtschalter, Aircondition oder Unterhaltungselektronik. Um Sicherheitsrisiken zu vermeiden, legt der für die Räumlichkeit Verantwortliche fest, was und gegebenenfalls für wie lange der Nutzer als Gast oder Kunde darf. Später stellt das System es ohne Verwaltungsaufwand jedem neuen Gast oder Kunden in seiner individuellen Sprache zu Verfügung.

Da Infrarotlicht keine Wände durchdringt und durch Gegenstände wie Stuhlreihen je nach Anordnung des Transmitters begrenzt werden kann, ist es möglich, die Anwesenheit eines Nutzers in einem Raum oder an einer bestimmten Position zu bestimmen. Das Verfahren kann nur mit hohem Aufwand getäuscht werden. Gleichzeitig dient es zum Vereinzeln der Nutzer und zum Individualisieren der Kommunikation, da Nutzer außerhalb des Raumes nicht teilhaben können. Auf dieser Basis kann ein temporärer Zugriff auf bestimmte Teile der Gebäudesteuerung durch beliebige, auch bis dahin unbekannte Nutzer, ermöglicht werden.

Die grundlegenden Eigenschaften des Verfahrens, mit dem ein Nutzer Zugriff auf die Gebäudesteuerung bekommt, sind die folgenden: Es besteht eine eindeutige Zuordnung von Nutzern zu einem Raum, unter bestimmten Voraussetzungen zu einer Position im Raum. Über die Infrarotverbindung kann eine raum- und ortsspezifische Kommunikationsadresse sowie ein geheimes temporäres Passwort übermittelt werden. Mit der Infrarotverbindung wird ein zweiter schneller Kommunikationskanal eröffnet. Zudem können Eigenschaften des Raumes zum Nutzer übermittelt und die Funktionen in der Sprache des Nutzers auf seinem Gerät angezeigt werden.

Die Erfindung wird nachfolgend anhand der Figuren 1 bis 3 näher beschrieben. Es zeigen:
- **Figur 1**: den prinzipiellen Aufbau des erfindungsgemäßen Systems,
- **Figur 2**: eine Bedienoberfläche auf einem Smartphone und
- **Figur 3**: ein Ablaufdiagramm des Verfahrens.

Die Initialisierung und die Schlüsselvergabe geschehen über die Hausinstallation, insbesondere der Basisstation, zum Infrarot-Transceiver und von dort mit Infrarotsignal zum Smartphone des Nutzers. Dabei sei auf die hochgradige Abhörsicherheit der Übertragung mittels Infrarotlicht hingewiesen. Bei der weiteren Kommunikation werden schnellere, mit dem sicher verteilten Schlüssel gesicherte Kanäle, genutzt, wobei ein Nutzer über sein persönliches Mobiltelefon, insbesondere über sein Smartphone, Steuerbefehle zur Ansteuerung der Funktionen vorgibt, die über eine dedizierte Funkverbindung zur Basisstation übertragen und von dieser dem jeweiligen Steuergerät zugestellt werden.

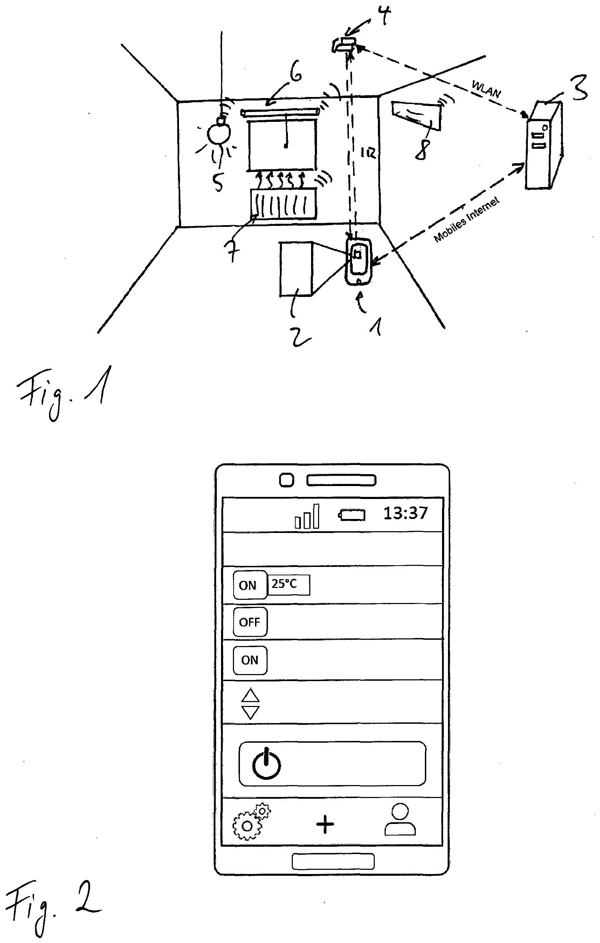

Figur 1 zeigt den prinzipiellen Aufbau des erfindungsgemäßen Systems zur Hausautomation in einer abgeschlossenen Räumlichkeit: Auf einem Smartphone 1, das einem Besucher der Räumlichkeit gehört und diesem zugeordnet ist, ist ein Anwendungsprogramm ("App") 2 installiert. Diese App ermöglicht die Kommunikation mit einer als Server ausgebildeten Basisstation 3 und einem Infrarot-Transceiver 4. Dabei geschieht die Kommunikation vom Smartphone 1 zur Basisstation in diesem Falle über das mobile Internet, während die Kommunikation zwischen der Basisstation und dem Infrarot-Transceiver 4 sich auf einem WLAN Kanal abspielt. Erfindungsgemäß wird die Kommunikation zwischen dem Smartphone 1 und dem Infrarot-Transceiver 4 über eine Infrarot-Verbindung abgewickelt. In der dargestellten Räumlichkeit befinden sich Komponenten der Hausautomation, die sich in diesem Falle über eine WLAN Verbindung zum Transceiver 4 steuern lassen. Dazu zählen Lampen 5, eine Verdunklungseinrichtung 6, die Heizung 7 und die Aircondition 8. Diese Funktionen werden von Komponenten unterschiedlicher Hersteller bereitgestellt und jeweils von einem Steuergerät angesteuert. Die der Räumlichkeit zugeordneten Steuergeräte stehen jeweils in datenleitender Verbindung mit einer gemeinsamen Basisstation, die im vorliegenden Fall von einem Server 3 realisiert ist.

Figur 2 zeigt die Benutzeroberfläche der App 2 auf dem Smartphone 1. Die Anordnung der Symbole und deren Bedeutung werden seitens des Servers 3 festgelegt, wobei jede beliebige Sprach- und Landeseinstellung möglich ist. Der Server 3 überträgt bei der Initialisierung die in der Räumlichkeit verfügbaren Funktionalitäten der Hausautomation. Die Form, die Farbe, die Beschriftung und die Maßeinheiten der in der App eingesetzten Symbole werden von den benutzerdefinierten Eigenschaften des Smartphones 1 festgelegt.

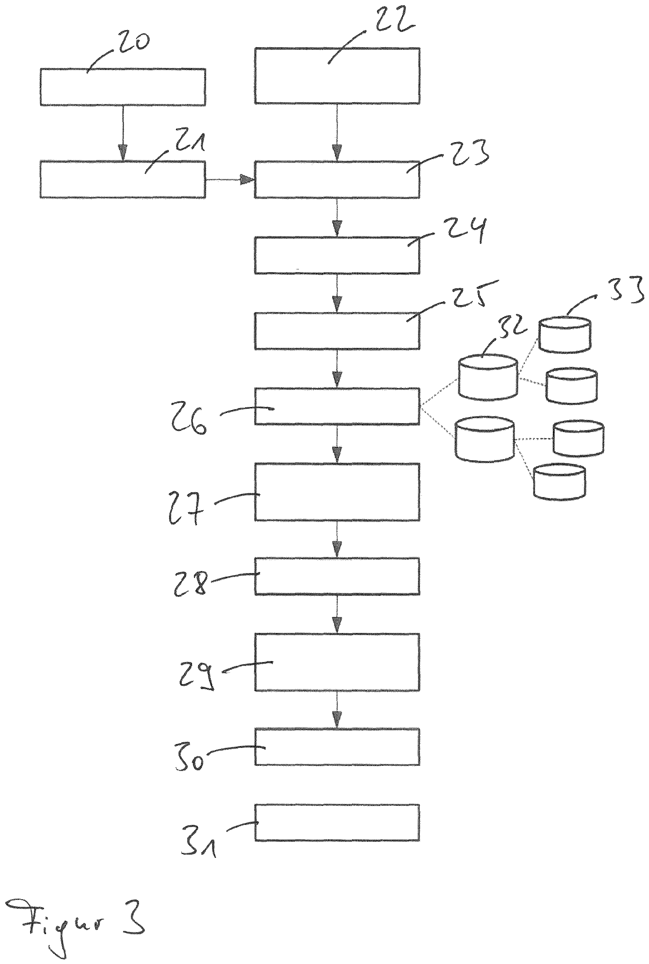

Figur 3 zeigt den Ablauf der einzelnen Verfahrenschritte: Zunächst ist davon auszugehen, dass dem Server 3, mithin der Basisstation, die Anzahl und die Ausstattung der einzelnen Räume 32 bekannt sind. Die Basisstation 3 hat Kenntnis über Umfang und Ausstattung der in den Räumen installierten Komponenten 33. Der Server 3 generiert in kurzen Abständen geheime zufällige Schlüssel der Art, dass diese nur mit hohem Aufwand zu erraten sind. Für jeden Raum 32 wird ein eigener Schlüssel generiert und in Schritt 22 an die in den Räumen 32 installierten Transceiver 4 versendet. Der Server 3 unterhält zu jedem Raum eine passwortgeschützte Website, die zur Kommunikation mit Maschinen geeignet ist. Dem Transceiver ist die zu seinem Raum gehörige Adresse bekannt. Da mit Infrarotlicht nur kurze Datensätze übertragen werden können, ist die Adresse entsprechend verkürzt.

Betritt ein Nutzer einen Raum (Schritt 20) und möchte die Komponenten des Raumes nutzen, so sendet er via Infrarotschnittstelle seines Smartphones oder Tablets eine Anfrage an den Transceiver seines Zimmers (Schritt 21), die dieser in Schritt 23 empfängt. Der Transceiver antwortet in Schritt 24 mit der Übersendung des ihm bekannten, weil vorher vom Server übermittelten, geheimen Schlüssel des Raumes 32 und der Adresse seines Servers an das Smartphone. So ausgestattet, identifiziert sich das Smartphone respektive die App in Schritt 25 über das mobile Netzwerk mit dem geheimen, dem Raum zugeordneten Schlüssel beim Server.

Der Gebäudeserver sendet nun in Schritt 26 die Ausstattungsmerkmale des Raumes an die App. Dabei werden die Funktionen in standardisierten Codes übermittelt, wobei die App die Übersetzung in entsprechende Icons mit Beschriftung übernimmt (Schritt 27). Die App enthält länderspezifische Merkmale und übersetzt die übermittelten Codes in die vom Eigentümer des Smartphones gewählte Sprache. Es erscheinen entsprechende Bedienelemente in der App, passend zu den Ausstattungsmerkmalen des Raumes.

Die App kann nun Bedienbefehle des Nutzers entgegennehmen (Schritt 28) und an den Server weitergeben (Schritt 29). Dabei identifiziert sich die App mit dem geheimen Schlüssel. Der Gebäudeserver empfängt die Bedienbefehle (Schritt 30), prüft ihre Gültigkeit und die Zuordnung zu einem Raum und gibt sie an die Geräte, im betreffenden Raum weiter (Schritt 31).

Personen außerhalb des Raumes haben keinen Zugriff zu den Funktionen des Raumes. Es ist kein manueller Installationsaufwand nötig. Es müssen etwas keine Zugangspasswörter manuell verteilt oder eingegeben werden. Die App zeigt immer die Funktionen und Bedienelemente des aktuellen Raumes an. Da der Schlüssel in kurzen Abständen verfällt, sind nur Personen im Raum berechtigt.

## Patentansprüche

1. Verfahren zum Bedienen von Funktionen der Hausautomation, die in einer abgeschlossenen Räumlichkeit zur Verfügung stehen, wobei die Funktionen jeweils von einem Steuergerät angesteuert werden und wobei die der Räumlichkeit zugeordneten Steuergeräte jeweils in datenleitender Verbindung mit einer gemeinsamen Basisstation (3) stehen, wobei ein Nutzer über sein persönliches Smartphone (1) Steuerbefehle zur Ansteuerung der Funktionen vorgibt, die über eine dedizierte Funkverbindung vom Smartphone (1) zur Basisstation (3) übertragen und von dieser dem jeweiligen Steuergerät zugestellt werden,
**dadurch gekennzeichnet,**
**dass** die dedizierte Funkverbindung eine mobile Internetverbindung zwischen dem Smartphone (1) des Nutzers und der Basisstation (3) ist, die zuvor durch einen initialisierenden Datenaustausch zwischen dem Smartphone (1) und einem in der Räumlichkeit befindlichen Infrarot-Transceiver (4) authentifiziert wird, wobei der initialisierende Datenaustausch über eine entsprechende Infrarotverbindung erfolgt.

2. Verfahren nach Anspruch 1,
**dadurch gekennzeichnet,**
**dass** die Authentifizierung der dedizierten Funkverbindung erlischt, sobald das Smartphone (1) aus dem Sendebereich des Infrarot-Transceivers (4) gelangt oder sobald ein vorgegebener Zeitpunkt überschritten ist.

3. Verfahren nach Anspruch 1 oder 2,
**dadurch gekennzeichnet,**
**dass** der Nutzer zum Zwecke der Authentifizierung mit seinem Smartphone (1) eine entsprechende Anfrage über die Infrarotverbindung an den Infrarot-Transceiver (4) sendet und daraufhin vom Transceiver (4) über dieselbe Infrarotverbindung Parameter zur Identifizierung und/oder geheime Schlüssel erhält.

4. Verfahren nach Anspruch 3,
**dadurch gekennzeichnet,**
**dass** die Parameter zur Identifizierung und/oder die geheimen Schlüssel von einem als Basisstation dienenden zentralen Server (3) generiert werden.

5. Verfahren nach einem der vorherigen Ansprüche,
**dadurch gekennzeichnet,**
**dass** authetifizierten Nutzern die Ausstattung des Raumes auf deren Smartphone (1) mitgeteilt wird.

6. Verfahren nach Anspruch 5,
**dadurch gekennzeichnet,**
**dass** die Ausstattungsmerkmale des Raumes auf dem Smartphone (1) des Nutzers länderspezifisch dargestellt werden.

7. System zur Umsetzung des Verfahrens nach einem der vorherigen Ansprüche,
**gekennzeichnet durch**
Steuergeräte zur Ansteuerung der Funktionen, wobei ein der Räumlichkeit zugeordnetes Steuergerät in datenleitender Verbindung mit einer Basisstation (3) steht,
Nutzern persönlich zugeordnete Smartphones (1) zur Vorgabe von Steuerbefehlen zur Ansteuerung der Funktionen über eine dedizierte Funkverbindung, die eine mobile Internetverbindung ist, und
eine Infrarotverbindung zum initialisierenden Datenaustausch zwischen einem Smartphone (1) und einem in der Räumlichkeit befindlichen Infrarot-Transceiver (4) zur Authentifizierung der dezidierten Funkverbindung.

## Claims

1. A method for operating functions of home automation, which are available in a closed room, the functions being controlled by a control device in each case and the control devices assigned to the room being connected to a common base station (3) in a data-conducting manner in each case, a user specifying control commands for controlling the functions by means of their personal smartphone (1), which are transmitted via a dedicated radio connection from the smartphone (1) to the base station (3) and assigned by the same to the respective control device, **characterized in that** the dedicated radio connection is a mobile Internet connection between the smartphone (1) of the user and the base station (3), which is authenticated in advance by means of an initializing data exchange between the smartphone (1) and an infrared transceiver (4) located in the room, wherein the initializing data exchange takes place by means of a corresponding infrared connection.

2. The method according to Claim 1, **characterized in that** the authentication of the dedicated radio connection expires as soon as the smartphone (1) leaves the transmission range of the infrared transceiver (4) or as soon as a predetermined time is exceeded.

3. The method according to Claim 1 or 2, **characterized in that** the user sends a corresponding request via the infrared connection to the infrared transceiver (4) using their smartphone (1) for the purpose of authentication and thereupon receives parameters for identification and/or confidential keys from the transceiver (4) via the same infrared connection.

4. The method according to Claim 3, **characterized in that** the parameters for identification and/or the confidential keys are generated by a central server (3) which is used as base station.

5. The method according to one of the preceding claims, **characterized in that** the equipment of the room is shared with authenticated users on their smartphone (1).

6. The method according to Claim 5, **characterized in that** the equipment features of the room are displayed on the smartphone (1) of the user in a country-specific manner.

7. A system for implementing the method according to one of the preceding claims, **characterized by** control devices for controlling the functions, wherein a control device assigned to the room is in data-conducting connection to a base station (3), smartphones (1) personally assigned to users for specifying control commands for controlling the functions via a dedicated radio connection, which is a mobile Internet connection, and an infrared connection for initializing data exchange between a smartphone (1) and an infrared transceiver (4) located in the room for authenticating the dedicated radio connection.

## Revendications

1. Procédé pour l'exploitation de fonctions de la domotique qui sont disponibles dans un local fermé, dans lequel les fonctions sont respectivement commandées par un appareil de commande et dans lequel les appareils de commande affectés au local sont respectivement en liaison de communication de données avec une station de base (3) commune, dans lequel un utilisateur donne, via son smartphone (1) personnel, des instructions de commande pour la commande des fonctions, lesquelles sont transmises par le smartphone (1) via une liaison radio dédiée à la station de base (3) et sont délivrées par cette dernière à l'appareil de commande respectif, **caractérisé en ce que** la liaison radio dédiée est une connexion Internet mobile entre le smartphone (1) de l'utilisateur et la station de base (3), laquelle est préalablement authentifiée par un échange de données d'initialisation entre le smartphone (1) et un émetteur-récepteur infrarouge (4) se trouvant dans le local, dans lequel l'échange de données d'initialisation s'effectue via une liaison infrarouge correspondante.

2. Procédé selon la revendication 1, **caractérisé en ce que** l'authentification de la liaison radio dédiée prend fin dès que le smartphone (1) quitte la zone de service de l'émetteur-récepteur infrarouge (4) ou dès qu'un moment prescrit est dépassé.

3. Procédé selon la revendication 1 ou 2, **caractérisé en ce que**, pour les besoins de l'authentification avec son smartphone (1), l'utilisateur envoie une demande correspondante via la liaison infrarouge à l'émetteur-récepteur infrarouge (4) et obtient suite à cela de la part de l'émetteur-récepteur (4), via la même liaison infrarouge, des paramètres pour l'identification et/ou des clés secrètes.

4. Procédé selon la revendication 3, **caractérisé en ce que** les paramètres pour l'identification et/ou les clés secrètes sont généré(e)s par un serveur central (3) servant de station de base.

5. Procédé selon l'une des revendications précédentes, **caractérisé en ce que** l'on communique à des utilisateurs authentifiés l'aménagement de l'espace sur le smartphone (1) de ceux-ci.

6. Procédé selon la revendications 5, **caractérisé en ce que** les caractéristiques d'aménagement de l'espace sont représentées sur le smartphone (1) de l'utilisateur de manière spécifique au pays.

7. Système pour la mise en oeuvre du procédé selon l'une des revendications précédentes, **caractérisé par** des appareils de commande pour la commande des fonctions, dans lequel un appareil de commande affecté au local est en liaison de communication de données avec une station de base (3), des smartphone (1) affectés personnellement à des utilisateurs pour donner des instructions de commande pour la commande des fonctions via une liaison radio dédiée, laquelle est une connexion Internet mobile, et une liaison infrarouge pour l'échange de données d'initialisation entre un smartphone (1) et un émetteur-récepteur infrarouge (4) se trouvant dans le local pour l'authentification de la liaison radio dédiée.
